# FASCICULE DE BREVET EUROPEEN

(11) **EP 3 821 504 B1**
(45) Date de publication et mention de la délivrance du brevet: **04.06.2025**
(21) Numéro de dépôt: 19790619.1
(22) Date de dépôt: 08.07.2019
(51) Int. Cl.: H01R 39/38, H01R 39/58, H02K 5/14, H02K 13/00, H02K 11/20

(54) **SYSTEME DE TRANSFERT DE PUISSANCE ENTRE UN ELEMENT TOURNANT ET UN ELEMENT FIXE**
SYSTEM ZUR LEISTUNGSÜBERTRAGUNG ZWISCHEN EINEM ROTIERENDEN ELEMENT UND EINEM FESTEN ELEMENT
SYSTEM FOR TRANSFERRING POWER BETWEEN A ROTATING ELEMENT AND A FIXED ELEMENT

(30) Priorité: 10.07.2018 FR 1856336
(43) Date de publication de la demande: 19.05.2021
(73) Titulaire: Mersen France Amiens SAS, 80080 Amiens (FR)
(72) Inventeur: BERARD, Geoffroy, 69120 Vaulx en Velin (FR); RAMLALL, Radjy, 59290 Wasquehal (FR); BERNARD, Olivier, Ledgewood, New Jersey 07852 (US)
(74) Mandataire: Fédit-Loriot
(86) Numéro de dépôt international: PCT/FR2019/051686
(87) Numéro de publication internationale: WO 2020/012099

(56) Documents cités:
- EP-A1- 0 098 991
- WO-A1-2008/148583
- FR-A1- 2 797 110
- FR-A1- 2 934 434
- US-A1- 2016 268 865

## Description

L'invention concerne le transfert de courant électrique entre un élément tournant et un élément fixe, l'élément tournant étant animé d'un mouvement de rotation par rapport à l'élément fixe.

L'invention peut trouver une application par exemple dans les machines électriques tournantes, notamment asynchrones, et plus particulièrement dans les génératrices d'éoliennes ou dans l'industrie (cimenteries, ports, mines...).

L'invention peut trouver une application par exemple dans le cas de puissances transférées supérieures à 25 kW, par exemple entre 25 kW et 100 kW (cette dernière valeur étant exclue), ou bien encore égales à 100 kW, ou bien strictement supérieure à 100 kW, avantageusement supérieures 500 kW (en particulier dans l'éolien).

L'invention n'est en rien limitée à une application dans l'éolien : par exemple, l'invention peut trouver une application dans les machines électriques synchrones de transfert de puissance, et dans divers domaines, par exemple l'industrie des procédés (industrie chimique, papeterie, etc.), l'aéronautique, l'aérospatiale, la robotique, la production d'électricité, ou autre.

L'élément tournant peut être un rotor, un arbre tournant, une bague montée sur un arbre tournant, un collecteur à bague rotatif, ou autre.

L'élément fixe peut être un stator, une bobine fixe, un équipement fixe raccordé électriquement aux câbles de balais, ou autre.

Classiquement, des balais (« carbon brush » en anglais, cette expression couvrant aussi le cas de balais ne comprenant pas de carbone), ou des brosses (également « fiber brush » en anglais) montés sur une couronne (dite aussi « rocker » en anglais) fixe par l'intermédiaire de porte-balais, et pressés contre l'élément tournant permettent d'assurer le transfert du courant entre cet élément tournant et des câbles raccordés aux balais ou aux brosses, ces câbles étant électriquement raccordés à l'élément fixe.

Il est connu d'utiliser la couronne non seulement comme support mécanique mais aussi pour le transfert du courant vers ou depuis l'élément contre lequel le balai est poussé. L'installation gagne ainsi en simplicité.

En revanche, la façon dont se déroule effectivement le transfert de courant entre l'élément contre lequel le balai est poussé et la couronne est relativement difficile à suivre. En particulier, les ruptures des câbles reliés aux balais sont délicates à détecter, ce qui peut être problématique dans le cas d'un environnement peu accessible comme une éolienne.

Un système de transfert de courant pour une machine électrique rotative comprenant un bouclier axial ayant généralement la forme d'une plaque métallique est présenté dans le document d'art antérieur FR 2 797 110 A.

Il existe donc un besoin pour un système permettant un meilleur suivi, ce qui permettrait de faciliter notamment les détections d'avaries.

L'invention se rapporte à un système de transfert de courant entre un élément tournant et un élément fixe, l'élément tournant étant animé d'un mouvement de rotation par rapport à l'élément fixe, ledit système de transfert comprenant
- un support à forme générale de plaque en périphérie de l'axe de rotation de l'élément tournant, comprenant une portion conductrice raccordée électriquement à l'un parmi l'élément fixe et l'élément tournant,
- au moins un, et avantageusement plusieurs, porte-balai monté sur et supporté par, ou intégré sur, le support, et conformé pour soutenir au moins un élément de contact glissant conducteur, destiné à être poussé en contact contre l'autre parmi l'élément fixe et l'élément tournant,
- un élément de résistance situé entre cet élément de contact glissant conducteur et la portion conductrice du support lorsque l'élément de contact glissant conducteur soutenu par le porte-balai est poussé en contact, pour limiter le passage de courant directement entre la portion conductrice, par exemple la plaque conductrice, et l'élément de contact glissant conducteur,
- des moyens de raccordement électrique de la portion conductrice du support à un câble solidarisé à l'élément de contact glissant conducteur pour le transfert de courant entre cette portion conductrice et l'élément de contact glissant conducteur.

L'élément de résistance peut présenter une résistance électrique supérieure ou égale à la résistance électrique de l'élément de contact glissant conducteur.

Le système peut comprendre ledit élément de contact glissant conducteur, soutenu par un porte-balai et destiné à être poussé en contact, mais on comprendra qu'il peut être commercialisé sans balai.

La résistance électrique de l'élément de contact glissant conducteur peut être mesurée entre une extrémité destinée à être en contact avec l'autre parmi l'élément fixe et l'élément tournant (par exemple une face frottante) et l'extrémité opposée à cette extrémité (par exemple une cosse). On pourra trouver dans la norme CEI 60136 une définition de la résistance électrique d'un balai.

Par exemple, l'élément de de résistance peut présenter une résistance électrique d'au moins 0,3 ohms, avantageusement d'au moins 0,5 ohms, avantageusement d'au moins 1 ohm, avantageusement d'au moins 100 ohms, avantageusement d'au moins 1 kiloohms.

Cet agencement peut permettre que lorsque l'élément de contact glissant conducteur est installé de façon à être poussé contre cet autre élément (l'élément tournant par exemple), la totalité ou la quasi-totalité (par exemple plus de 95% de l'intensité) du courant circulant entre cet élément de contact et cet autre élément passe par les moyens de raccordement électriques, par exemple un ou des câbles solidarisés à cet élément de contact. Dit autrement, l'élément de résistance impose un chemin pour le transfert de courant.

Le suivi du transfert de courant entre l'élément tournant et l'élément fixe peut ainsi être plus simple à mener, même dans le cas d'un courant alternatif ou non constant, dans la mesure où le chemin présumé du courant est déjà déterminé.

Par exemple, lorsque plusieurs éléments de contacts glissants conducteurs sont prévus, un tel système peut permettre de faciliter la détection d'un déséquilibre, en matière d'intensité de courant, d'un élément de contact glissant conducteur à l'autre.

En outre, en cas de rupture de câble, plus aucun courant ne transite par l'élément de contact glissant conducteur concerné, par exemple un balai, évitant ainsi un fonctionnement en mode dégradé dans lequel le courant passerait de la portion conductrice au balai par les parois du balai, via par exemple le porte-balai.

De façon surprenante, même avec une résistance électrique relativement faible, de l'ordre du ohm, la totalité ou la quasi-totalité (par exemple plus de 95% de l'intensité) du courant circulant entre cet élément de contact glissant conducteur et cet autre élément passe par le ou les câbles solidarisés à cet élément de contact glissant conducteur, et ce même après un temps d'utilisation conséquent, par exemple de l'ordre de plusieurs mois.

Par exemple, l'élément de résistance peut comprendre un élément isolant situé entre cet élément de contact glissant conducteur et la portion conductrice du support lorsque l'élément de contact glissant conducteur est soutenu par le porte-balai et poussé en contact. Le système peut être conformé de sorte que l'élément isolant empêche alors le passage de courant directement entre la portion conductrice et l'élément de contact glissant conducteur.

L'élément isolant présente une résistance électrique d'au moins 100 kiloohms.

Dans un mode de réalisation, l'élément de résistance peut être distinct du support et du porte-balai. Cet élément distinct peut par exemple être fixé sur le support et/ou sur le porte-balai.

L'élément de résistance peut par exemple faire partie du, ou comprendre le, porte-balai.

Avantageusement, cet élément isolant, et plus généralement l'élément de résistance, peut faire partie du support à forme générale de plaque. Ainsi, le support peut comprendre en outre une portion résistante, avantageusement une portion isolante. L'élément de résistance (avantageusement isolant) comprend alors cette portion résistante (avantageusement isolante).

Dans un mode de réalisation, du matériau résistant (avantageusement isolant) peut par exemple être appliqué sur le porte-balai et/ou sur la portion conductrice du support.

Le matériau résistant ou isolant peut en outre permettre de protéger le porte-balai et/ou le support.

Le matériau résistant (avantageusement isolant) peut être un revêtement isolant, par exemple une peinture anti-flash, un plastique, ou autre. Ce matériau peut présenter une résistivité d'au moins 0,1 ohms-mètres, avantageusement d'au moins 1 ohms-mètre, avantageusement d'au moins 10³ ohms-mètres.

Avantageusement, le matériau résistant (avantageusement isolant) peut être choisi de sorte que sa résistivité varie de moins de 1% lorsque soumis à des tensions comprises entre 600V et 1000 V et avantageusement même pour des tensions comprises entre 230 V à 2700 V.

Le porte-balai peut par exemple être réalisé en un matériau résistant, avantageusement isolant, par exemple un polymère, ou bien encore être au moins partiellement revêtu d'un matériau résistant, avantageusement isolant. Dans le dernier cas, on pourrait par exemple prévoir un porte-balai réalisé par emboutissage d'une tôle recouverte de matériau isolant.

Dans le cas d'un élément de résistance faisant partie du support, on peut avantageusement prévoir que l'une parmi la portion conductrice et la portion résistante (avantageusement isolante) peut être obtenue par application d'un matériau conducteur ou respectivement résistant (avantageusement isolant) contre ou sur l'autre parmi l'élément de résistance et la portion conductrice.

La portion résistante peut ainsi permettre de protéger la portion conductrice, au moins pour les surfaces et/ou bords de la portion conductrice recouvert(e)s par le matériau résistant, ce qui peut être intéressant dans le cas d'un environnement agressif.

Le support à forme générale de plaque peut avantageusement être non convexe, par exemple définir plusieurs segments rectilignes et formant des angles entre eux, afin d'entourer au moins partiellement l'élément tournant, ou autre.

Avantageusement, le support à forme générale de plaque peut être en arc de cercle.

Le support peut s'étendre sur plus 20°, 60°, 90°, 180°, ou même 360° - auquel cas il s'agit d'une couronne fermée.

Ce support peut avantageusement être disposé concentrique avec l'élément tournant, c'est-à-dire que le support définit des directions radiales convergent vers un point sur ou proche de l'axe de rotation de l'élément tournant.

Alternativement, le support à forme générale de plaque peut présenter des contours rectilignes d'une extrémité à l'autre du support. Par exemple, ce support peut avoir une forme rectangulaire ou carrée.

Le support peut présenter notamment une épaisseur supérieure à 0,5 millimètres, par exemple de l'ordre de 1 à 20 millimètres.

La portion conductrice du support à forme générale de plaque peut par exemple comprendre une plaque conductrice.

Dans un mode de réalisation, cette plaque conductrice peut occuper plus de 90% de, avantageusement plus de 95% de, avantageusement la totalité de la surface du support à forme générale de plaque.

Dans la présente demande, il est convenu qu'une plaque comprend deux surfaces opposées l'une à l'autre, distantes l'une de l'autre de l'épaisseur de la plaque, et des bords. L'épaisseur de la plaque est bien moindre que l'une au moins des dimensions des surfaces, par exemple au moins 10 fois inférieure à la longueur de la surface. En conditions normales d'utilisation, les surfaces sont dans des plans normaux à la direction de l'axe de rotation, ou sensiblement normaux à cette direction.

Cette plaque conductrice peut être relativement robuste, et présenter notamment une épaisseur supérieure à 0,5 millimètres, par exemple de l'ordre de 1 à 20 millimètres, par exemple entre 3 et 6 millimètres, notamment dans le cas d'une portion conductrice en cuivre. On peut aussi parler de bus barre, de barre omnibus, ou « busbar » en anglais.

La plaque conductrice peut être par exemple en arc de cercle et peut s'étendre sur 20°, 60°, 90°, 180° ou même 360° - auquel cas il s'agit d'une couronne fermée.

Alternativement, la plaque conductrice peut avoir une forme rectangulaire, carrée, ce qui peut permettre d'intégrer d'autres éléments à fixer dans la machine, voire être intégrée dès la conception dans la partie fixe de la machine par exemple.

Le support peut par exemple être intégré dès la conception dans la partie fixe de la machine, ou non.

Dans un autre mode de réalisation, la plaque conductrice peut occuper moins de 90% de la surface du support à forme générale de plaque, notamment moins de 70%, 60% ou 50% de cette surface.

Dans le cas d'un élément de résistance comprenant une portion résistante faisant partie du support, la plaque conductrice peut avantageusement jouxter une partie au moins de la portion résistante (avantageusement isolante), cette partie étant à forme de plaque, de sorte que la plaque conductrice et cette partie au moins de la portion résistante (avantageusement isolante) soient en contact par leur épaisseur.

Du matériau résistant (avantageusement isolant) peut alors avoir été appliqué contre la plaque conductrice pour former cette partie à forme de plaque jouxtant la plaque conductrice.

Cette partie au moins de la portion résistante (avantageusement isolante) peut occuper plus de 10% de la surface du support, avantageusement plus de 30%, 40% ou 50% de cette surface.

Le porte-balai peut par exemple être installé sur cette partie au moins de la portion résistante (avantageusement isolante), sans contact électrique direct avec la portion conductrice. Cette partie isolante ainsi située entre l'élément de contact glissant conducteur et la portion conductrice limite ou empêche le passage de courant directement entre la portion conductrice et l'élément de contact glissant conducteur.

Par exemple, la plaque conductrice peut être en périphérie de cette partie au moins de la portion résistante (avantageusement isolante), le bord externe en arc de cercle de cette partie au moins de la portion résistante (avantageusement isolante) touchant le bord interne en arc de cercle (complémentaire) de la plaque conductrice.

Avantageusement, au moins une partie de la portion résistante (avantageusement isolante) peut comprendre une couche de matériau résistant (avantageusement isolant), dite couche résistante (avantageusement isolante), appliquée sur une partie au moins d'au moins une surface de la plaque conductrice.

Cette couche résistante (avantageusement isolante) peut par exemple s'étendre au moins dans un plan pris en sandwich entre la plaque conductrice et l'élément de contact glissant conducteur lorsque soutenu par le porte-balai et poussé en contact, cette couche résistante (avantageusement isolante) empêchant alors le passage de courant directement entre la plaque conductrice et l'élément de contact glissant conducteur.

La couche de matériau résistant (avantageusement isolant) peut être directement en contact avec une surface de la plaque conductrice, ou non. On peut par exemple prévoir une couche intercalaire entre la couche de matériau résistant (avantageusement isolant) et la surface de la plaque conductrice.

La couche de matériau résistant (avantageusement isolant) peut être directement en contact avec une paroi de l'élément de contact glissant, ou non. En particulier, la couche de matériau résistant (avantageusement isolant) peut être en contact avec un porte-balai, notamment lorsque ce porte-balai définit une cage entourant entièrement un balai.

La couche de matériau résistant et/ou isolant peut avantageusement recouvrir plus de 10%, avantageusement plus de 80%, et notamment la totalité d'une surface au moins de la plaque conductrice.

La couche de matériau résistant (avantageusement isolant) peut être appliquée sur une partie au moins d'une seule des deux surfaces de la plaque conductrice, ou bien encore sur les deux surfaces.

La couche de matériau résistant (avantageusement isolant) peut recouvrir la totalité des deux surfaces de la plaque conductrice.

La couche de matériau résistant (avantageusement isolant) peut être relativement fine, notamment dans le cas d'un matériau résistant (avantageusement isolant) appliqué à l'état liquide, par exemple au pinceau ou au spray, ou non. La couche de matériau résistant (avantageusement isolant) présenter notamment une épaisseur supérieure à 10 micromètres, par exemple entre 0,01 à 20 millimètres.

Dans un mode de réalisation, la couche résistante (avantageusement isolante) peut par exemple être surmoulée ou enrobée sur la portion conductrice.

La portion conductrice peut par exemple être en cuivre, ou autre(s) matériau(x) conducteur(s). La portion conductrice peut comprendre plusieurs couches réalisées en des matériaux conducteurs différents, par exemple une couche de cuivre et une couche d'acier pour concilier conductivité et robustesse.

L'élément de résistance peut par exemple être réalisé en graphite ou autre.

L'élément isolant peut par exemple être réalisé en un ou plusieurs matériau(x) isolant(s), par exemple en polymère, notamment lorsque la portion conductrice comprend des pistes en cuivre.

La plaque conductrice et/ou le support peu(ven)t avantageusement être plan(e)(s) dans un plan incluant les directions tangentielles et radiales - normal (ou sensiblement normal) à l'axe de rotation.

La plaque conductrice et/ou le support (avantageusement isolante) peu(ven)t par exemple être découpé(e)(s), par exemple en arc de cercle, moulé(e)(s), ou autre.

Le support à forme générale de plaque peut par exemple être solidaire de l'élément fixe.

L'élément de contact glissant conducteur peut par exemple comprendre un balai, auquel cas le porte-balai monté sur et supporté par le support peut être conformé pour recevoir un balai et le pousser en contact contre l'autre parmi l'élément fixe et l'élément mobile.

Le balai peut classiquement comprendre du carbone, par exemple sous forme de graphite, ou non.

Par exemple le balai peut être réalisé en un matériau comprenant essentiellement du carbone et du métal, par exemple obtenu en mélangeant une poudre de carbone et une poudre de métal. Ce métal peut par exemple comprendre de l'argent. On pourra prévoir de substituer une partie ou la totalité de l'argent par du cuivre ou par un autre métal.

Le porte-balai peut par exemple comprendre un élément ressort pour pousser le balai vers l'autre élément.

L'invention n'est en rien limitée à des balais de contact. Par exemple, l'élément de contact glissant conducteur peut comprendre une brosse de contact avec des fibres ou des fils, par exemple un peigne de fibres de carbone ou autre. On pourra par exemple prévoir une couronne en aluminium, en deux parties, assemblées sur un stator, des porte-balais fixés chacun sur la couronne et sur lesquels sont montés des peignes en fibres de carbone.

Dans le cas de brosses de contact, le système peut être dénué d'éléments ressort servant à pousser l'élément de contact contre l'autre élément parmi l'élément fixe et l'élément tournant. Les porte-balais peuvent en effet être disposés suffisamment prés de l'autre élément, et les fibres de la brosse être suffisamment longues et rigides pour que les fibres elles-mêmes poussent au moins une partie de leur extrémité en contact contre l'autre élément.

Mais bien entendu, on peut aussi prévoir des éléments ressorts pour pousser des brosses de contact contre cet autre élément.

L'élément de résistance permet de créer un environnement plus favorable à l'installation de capteurs que la portion conductrice susceptible d'être soumise à des courants forts et/ou variables, permettant là encore de mieux gérer le suivi du transfert de courant. En particulier, la portion résistante (avantageusement isolante) peut permettre de limiter les contacts entre les capteurs et la portion conductrice.

L'élément de résistance a des dimensions adaptées pour empêcher tout contact électrique direct entre les faces de l'élément de contact et la portion conductrice parcourue par le courant. Par exemple, l'élément de résistance (avantageusement isolant) peut recouvrir la totalité ou plus de 80% de la face d'une plaque conductrice sur laquelle est monté l'élément de contact. Selon un autre exemple, l'élément de résistance a des dimensions proches de celles de l'élément de contact : un matériau isolant peut par exemple être appliqué sur la plaque conductrice à l'emplacement de l'élément de contact.

Selon encore un autre exemple, l'élément de résistance (avantageusement isolant) peut avoir des dimensions plus faibles que celles de la face de l'élément de contact en regard de la face de la plaque conductrice, dans la mesure où cet élément est suffisamment épais pour empêcher des contacts ainsi que la formation d'arcs électriques entre l'élément de contact et la plaque conductrice.

Avantageusement, du matériau résistant (avantageusement isolant) peut être appliqué sur ou contre la portion conductrice (respectivement sur ou contre le porte-balai) de façon non amovible.

Plus généralement, on peut prévoir que l'élément de résistance (avantageusement isolant) ne puisse être séparé de la portion conductrice (respectivement, du porte-balai) sans dégradation du système de transfert.

Avantageusement, le système de transfert peut comprendre en outre en outre au moins un capteur apte à mesurer une valeur de paramètre caractérisant le fonctionnement de l'élément de contact glissant conducteur, par exemple un capteur de température, de courant, d'usure, d'accélération (par exemple en détectant des vibrations anormales), ou autre.

Ce ou ces capteur(s) peu(ven)t permettre de détecter le non passage de courant dans le câble ou un déséquilibre d'un élément de contact à l'autre, etc.

Ce ou ces capteur(s) peu(ven)t permettre de détecter des ruptures de câble, de sorte que suite à l'émission d'un message d'alerte, une décision peut être prise (par exemple arrêt d'exploitation, réparation, etc.), permettant ainsi d'éviter de sursolliciter un plus petit nombre de balais.

Ce ou ces capteur(s) peu(ven)t être installés dans ou sur l'élément de résistance, avantageusement dans ou sur l'élément isolant. Dans le cas d'un élément de résistance obtenu par application d'un matériau à l'état fluide, un ou des capteurs peuvent être noyés dans ce matériau.

Ce ou ces capteurs peuvent par exemple être installés dans une portion résistante du support et/ou dans du matériau résistant du porte-balai.

Dans un mode de réalisation, le système peut comprendre en outre au moins deux éléments linéaires conducteurs (fils, pistes, nappes...) raccordant électriquement le capteur à des moyens de traitement afin d'échanger des mesures ou des commandes.

Dans le cas de capteurs montés sur un élément de résistance fixé ou intégré au porte-balai, on pourra prévoir un raccordement électrique entre ces capteurs et une carte montée sur le support, par exemple noyée dans du matériau isolant formant une portion isolante du support.

Alternativement ou en complément, on peut tout à fait prévoir des moyens de transmission de données sans fil, par exemple Bluetooth, ZigBee ou autre.

Avantageusement et de façon non limitative, ces éléments linéaires conducteurs peuvent être au moins en partie noyés dans du matériau isolant.

Avantageusement et de façon non limitative, ces éléments peuvent être au moins en partie noyés dans la portion résistante (avantageusement isolante). On profite de l'existence de la portion résistante (avantageusement isolante) pour protéger les éléments linéaires conducteurs.

Dans un mode de réalisation, le système peut comprendre en outre des moyens de traitement, par exemple un microcontrôleur, un microprocesseur, ou autre.

Avantageusement et de façon non limitative, ces moyens de traitement peuvent être au moins en partie noyés dans du matériau résistant (avantageusement isolant), avantageusement dans la portion isolante. On profite de l'existence de la portion isolante pour protéger les moyens de traitement.

Alternativement, les moyens de traitement peuvent être montés sur le système et/ou distants, par exemple accessibles via un réseau de télécommunications, par exemple un réseau de téléphonie mobile ou autre.

Avantageusement, ces moyens de traitement peuvent être agencés pour piloter le système de transfert. Par exemple, les moyens de traitement peuvent être en communication avec un actionneur, par exemple un actionneur de l'élément tournant (par exemple une boite de vitesse), d'un dispositif de ventilation (ventilateur, extracteur, ou autre) et/ou autre.

L'invention n'est en rien limitée à un pilotage du système de transfert par des moyens de traitement. Le pilotage peut par exemple être effectué par un opérateur humain - auquel cas on peut par exemple prévoir d'afficher des données issues de mesures effectuées par les capteurs sur un écran ou un système de supervision, par exemple SCADA (pour « Supervisory Control and Data Acquisition ») dans l'éolien).

Avantageusement et de façon non limitative, les moyens de traitement agencés pour piloter le système de transfert peuvent être en communication avec le ou les capteurs.

Avantageusement, ces moyens de traitement peuvent être agencés pour piloter le système de transfert en fonction des valeurs mesurées issues du ou des capteurs.

Par exemple, les moyens de traitement peuvent générer à partir de valeurs de mesure reçues des messages de commande de l'élément tournant, par exemple en contrôlant le couple, ou bien encore du dispositif de ventilation, en contrôlant son flux et/ou la température de l'air circulant.

Dans un mode de réalisation avantageux, les moyens de traitement peuvent être agencés pour émettre un message de commande du dispositif de ventilation en cas de détection de déséquilibre dans les courants collectés/injectés d'un élément de contact glissant conducteur à l'autre.

Ce message de commande peut être élaboré de façon à augmenter le refroidissement d'au moins un élément de contact glissant conducteur, par exemple en augmenter le flux et/ou en diminuant la température de l'air circulant.

Un tel asservissement peut permettre de favoriser le transfert de courant. En particulier, en pilotant la ventilation, on peut jouer sur la température. En abaissant la température et/ou en ajustant le débit de l'air afin de favoriser la dissipation de chaleur du système de transfert, on peut dans certains cas tendre à rééquilibrer, au moins en partie les courants d'un élément de contact à l'autre.

La ventilation peut permettre en outre de refroidir ou de limiter l'échauffement de l'élément rotatif.

Avantageusement, les moyens de traitement peuvent être agencés de sorte qu'en cas de détection d'une non transmission de courant par un élément de contact glissant conducteur (par exemple détection d'une rupture du câble correspondant), le message de commande soit élaboré de façon à augmenter le refroidissement au moins du ou des autre(s) élément(s) de contact glissant conducteur(s), par exemple le refroidissement de tous les éléments de contact glissant conducteurs. On peut ainsi limiter la surchauffe du ou des élément(s) de contact glissant conducteur(s) en fonctionnement et de facto sursollicités.

Avantageusement, les moyens de traitement peuvent être agencés de sorte qu'en cas de détection d'un déséquilibre dans les courants collectés/injectés d'un élément de contact glissant conducteur à l'autre alors que tous les éléments de contact glissant conducteurs transmettent du courant, le message de commande soit élaboré de façon à augmenter le refroidissement au moins du ou des élément(s) de contact glissant conducteur(s) transmettant le plus de courant, afin de limiter les dégradations liées à la sursollicitation de ce ou ces élément(s) de contact glissant conducteur(s).

Dans un mode de réalisation, et notamment lorsque du matériau résistant ou isolant est appliqué sur la plaque et/ou sur le porte-balai, ce matériau peut être déposé en déformant sur la plaque conductrice et/ou sur le porte-balai un matériau résistant (avantageusement isolant), ledit matériau ayant avantageusement déjà une forme de couche préalablement à la déformation. Cette opération peut être réalisée à froid ou à une température en deçà de la température à laquelle ce matériau isolant change de composition ou de phase.

Avantageusement, l'élément de résistance (avantageusement isolant) peut être enrobé et/ou surmoulé autour de la plaque conductrice et/ou du porte-balai, par exemple par enduction ou empotage (« potting » en anglais), collé à la plaque conductrice, ou bien encore son matériau peut être appliqué, par exemple au pinceau, par un spray ou autre, lorsqu'à l'état liquide, vapeur ou de poudre sur la plaque et/ou le porte-balai, ou autre.

Le matériau de la portion résistante (avantageusement isolante) peut être laminé sur la plaque conductrice, ou bien être appliqué manuellement, ou autre.

Dans un mode de réalisation, l'élément résistant (avantageusement isolant) peut comprendre une peinture ou un vernis, par exemple une peinture comprenant une résine, par exemple une résine époxy ou autre. Ceci peut être intéressant notamment dans le cas d'un porte-balai recevant plusieurs balais : on peut appliquer un vernis sur les parois internes du porte-balai pour isoler les balais les uns des autres.

Dans un mode de réalisation, le matériau isolant peut comprendre du matériau polymère thermoplastique, notamment un matériau polymère thermodurcissable.

Par exemple, on pourra utiliser du poly(naphtalate d'éthylène) ou PEN, par exemple un film Teonex^{®}.

Dans ce cas, on peut prévoir de chauffer ce matériau à une température de par exemple 120°C, afin de déformer la couche.

Dans un mode de réalisation, le matériau isolant peut comprendre un polyimide, par exemple sous forme de film, par exemple du Kapton^{®}, par exemple un film de Kapton^{®}.

Dans un mode de réalisation, le film de polyimide peut être noyé dans du PEN.

Avantageusement, tout ou partie du porte-balai peut être fixé de façon non amovible sur le support, c'est-à-dire que le porte-balai ne peut être séparé de la plaque conductrice sans dégradation du système de transfert. Ainsi, il n'est pas nécessaire de prévoir des réglages pour positionner le porte-balai lors de l'installation du bus bar.

Par exemple, une partie au moins du porte balai peut être fixée par laminage dans la portion résistante (avantageusement isolante).

En particulier, le porte-balai peut être obtenu à partir d'une feuille de métal, par exemple par pliage et/ou emboutissage. On lamine ensuite les bords d'extrémité de cette feuille avec la portion résistante (avantageusement isolante), de façon à fixer le porte-balai sur le support.

Dans un mode de réalisation, le porte-balai peut comprendre deux éléments assemblables l'un à l'autre de façon réversible, un seul de ces éléments étant fixé de façon non amovible sur le support.

Par exemple, le porte-balai peut comprendre :
- une partie amovible comprenant au moins une partie de la cage destinée à recevoir le balai,
- une partie adaptatrice fixée de manière non amovible sur le support, par exemple sur la portion résistante (avantageusement isolante).

Avantageusement, la partie amovible peut être ajustable suivant la direction radiale, permettant ainsi d'adapter le positionnement de la cage par rapport au diamètre de l'élément tournant. Ceci peut permettre de faciliter le respect de la recommandation selon laquelle la cage et la bague doivent être distantes de 2-3 millimètres.

Avantageusement, on peut prévoir un système dit d'échange sous-tension (ou « plug-set » en anglais) permettant de connecter/déconnecter les balais alors que la machine est en charge, notamment dans le cas d'une application aux générateurs synchrones des centrales hydroélectriques.

Avantageusement la partie non amovible, fixée sur le support peut être en partie noyée dans le matériau résistant (avantageusement isolant).

Il est en outre proposé un ensemble comprenant un élément tournant, un élément fixe, et le système de transfert de données décrit ci-dessus. Cet ensemble peut être intégré dans une éolienne, ou non.

Cet ensemble peut comprendre plusieurs supports, ou bien un seul support.

Il est aussi proposé une éolienne comprenant cet ensemble. L'élément tournant peut comprendre l'arbre rapide, être solidaire de cet arbre ou bien encore être entrainé en mouvement par cet arbre.

L'invention trouve une application dans le transfert de puissance via un contact tournant, notamment de fortes tensions, supérieures à 100 V, avantageusement supérieures à 400 V, et/ou de fortes puissances électriques, supérieures à 0,1 MW, avantageusement supérieures 500 kW (en particulier dans l'éolien).

De manière plus générale, l'invention peut trouver une application pour le transfert de puissances supérieures ou égales à 25 kW, par exemple entre 25 kW et 100 kW, cette dernière valeur étant exclue (notamment dans l'industrie), égales à 100 kW (notamment dans l'industrie ou l'éolien), ou strictement supérieures à 100 kW (notamment dans l'éolien), par exemple supérieures ou égales à 200 kW.

Il est ainsi proposé d'utiliser l'ensemble décrit ci-dessus dans l'industrie, notamment les cimenteries, les ports, les mines etc., ou dans l'éolien.

L'invention n'est pas limitée au transfert de signaux continus : par exemple, le système de transfert peut servir au raccordement de masses. On pourra par exemple prévoir quatre systèmes avec chacun une couronne de type bus barre : trois de ces couronnes servent au transfert d'une phase correspondante, tandis que la dernière couronne est dédiée au transfert d'un signal de masse généralement nul, mais sujet à des variations relativement peu prédictibles.

Les moyens de raccordement peuvent comprendre une broche ou une tige, un dispositif à vis et écrou coopérant avec un orifice défini dans la plaque conductrice et avec une cosse d'extrémité de câble, un connecteur mâle ou femelle destiné à coopérer avec un connecteur femelle ou mâle, respectivement d'extrémité de câble, des pattes dans le plan de la plaque conductrice, réalisées d'une seule pièce avec la plaque conductrice, ou autre.

L'invention se rapporte en outre à un procédé de réalisation d'un système de transfert de courant entre un élément tournant et un élément fixe, l'élément tournant étant animé d'un mouvement de rotation par rapport à l'élément fixe, le procédé comprenant
- prévoir un support à forme générale de plaque, destiné à être situé en périphérie de l'axe de rotation de l'élément tournant, comprenant une portion conductrice, la portion conductrice étant destinée à être raccordée électriquement à l'un parmi l'élément fixe et l'élément tournant,
- prévoir au moins un porte-balai installé sur le ou intégré au support, conformé pour soutenir un élément de contact glissant conducteur destiné à être poussé en contact contre l'autre parmi l'élément fixe et l'élément tournant,
- installer un élément de contact glissant conducteur dans le porte-balai,
- prévoir un élément de résistance situé entre l'élément de contact glissant conducteur et la portion conductrice du support, cet élément de résistance présentant une résistance électrique supérieure ou égale à celle de l'élément de contact glissant conducteur,
- prévoir des moyens de raccordement électrique de la portion conductrice à un câble solidarisé à l'élément de contact glissant conducteur pour le transfert de courant entre la plaque conductrice et l'élément de contact glissant conducteur.

L'invention n'est bien entendu pas limitée par un ordre quelconque des étapes énoncées ci-dessus.

Au moins un parmi le support et le porte-balai peut avantageusement comprendre l'élément résistant, avantageusement isolant, disposé alors entre l'élément de contact glissant conducteur et la portion conductrice du support.

On pourra éventuellement installer en outre des moyens ressort, un support de brosse et/ou autre.

Avantageusement et de façon non limitative, on peut en outre appliquer du matériau résistant, avantageusement isolant, sur ou contre la portion conductrice et/ou le porte-balai, de façon à former une portion résistante (avantageusement isolante).

L'étape d'application de matériau résistant, avantageusement isolant, peut avantageusement être menée en déformant sur tout ou partie d'une au moins des faces de la plaque conductrice et/ou sur le porte-balai ce matériau résistant ou isolant.

Dans un mode de réalisation, le porte-balai peut être obtenu à partir d'une feuille de métal, par exemple ou pliant ou emboutissant cette feuille de métal.

Le porte-balai peut comprendre des parois définissant un logement pour un balai, par exemple trois ou quatre parois.

Dans un mode de réalisation, le porte-balai peut comprendre au moins un élément de fixation s'étendant depuis une des parois du porte-balai vers l'extérieur du porte-balai, dans un plan déporté par rapport au logement du balai, par exemple une oreille ou patte de fixation issue d'une feuille de métal, par exemple la même feuille de métal que celle dont est issu le porte-balai.

Dans un mode de réalisation, le procédé peut comprendre en outre une étape consistant à laminer cette oreille dans le matériau résistant ou isolant de la portion résistante ou isolante.

Dans un autre mode de réalisation, la patte de fixation peut être percée d'un orifice, et le procédé peut comprendre une étape consistant à fixer par vissage ou équivalent cette patte au support.

Le porte-balai peut être tout ou partie conducteur, ou bien encore tout ou partie isolant.

L'invention sera mieux décrite en référence aux figures ci-après, lesquelles représentent des modes de réalisation donnés à titre d'exemple et non limitatifs.
La figure 1 montre schématiquement une éolienne selon un mode de réalisation de l'invention.
La figure 2 montre un exemple de système de transfert du type connu de l'art antérieur.
La figure 3A est une vue en coupe et schématique d'un exemple de système de transfert selon un mode de réalisation de l'invention, dans lequel la couche isolante est relativement localisée et le porte-balai est vissé sur la couche isolante, de façon réversible.
La figure 3B est une vue en coupe et schématique d'un autre exemple de système de transfert selon un mode de réalisation de l'invention.
La figure 3C est une vue en perspective et schématique d'encore un autre exemple de système de transfert selon un mode de réalisation de l'invention.
La figure 4 est une vue en perspective d'un exemple de système de transfert selon un mode de réalisation de l'invention, dans lequel la couche isolante recouvrent la totalité de la plaque conductrice et le porte-balai laminé dans la couche isolante, la couche isolante n'étant pas représentée sur cette figure.
La figure 5 est une vue en coupe, et schématique, d'un exemple d'ensemble selon encore un autre mode de réalisation de l'invention.
Les figures 6A, 6B et 6C illustrent des variantes de réalisation, dans lesquelles on a prévu des capteurs et des moyens de traitement sur la plaque conductrice.

Des références identiques peuvent désigner des éléments identiques ou similaires, dans leur forme ou leur fonction, d'une figure à l'autre.

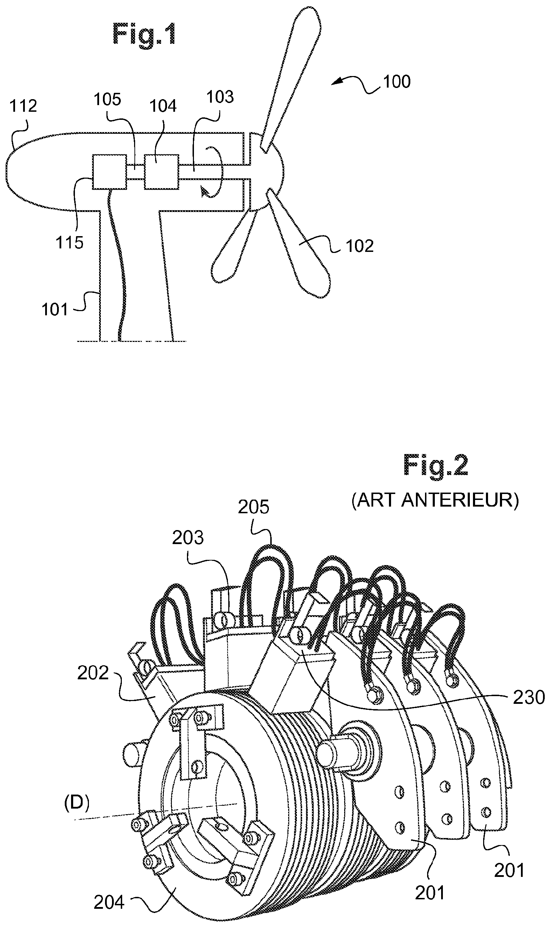

En référence à la figure 1, une éolienne 100 comprend un mât 101, une nacelle 112 et des pâles 102 solidarisées à un arbre dit lent 103.

Un multiplicateur 104 permet de convertir le mouvement de rotation de l'arbre lent 103 en un mouvement plus rapide d'un arbre dit rapide 105.

Une génératrice 115 permet de générer du courant à partir du mouvement de cet arbre rapide 105.

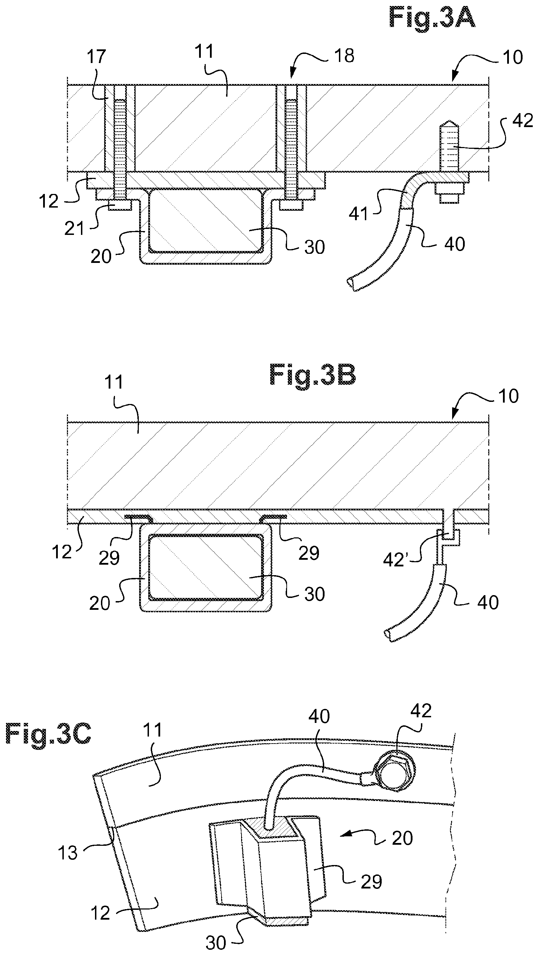

Cette génératrice 115 est une machine électrique tournante comprenant un rotor, un stator et des balais. Elle sera décrite plus en détail en référence à la figure 3.

La figure 2 illustre un exemple de génératrice du type connue de l'art antérieur.

En référence cette figure, des plaques conductrices 201 en arc de cercle sont disposées autour d'un axe de rotation (D). Ces plaques conductrices sont solidaires d'un stator non représenté.

Des porte-balais 202 sont fixés sur les plaques conductrices 201. Chaque porte-balai définit une cage pour recevoir un balai 230 ainsi qu'un moyen ressort 203 pour pousser ce balai en contact contre des bagues de l'élément tournant 204 de la génératrice. L'arbre du rotor n'est pas représenté sur cette figure 2.

Des câbles 205 fixés au balai par une extrémité ont leur autre extrémité raccordée à des connexions 206 en contact électrique avec l'élément de plaque 201.

Toutefois les porte-balais 202 sont eux-mêmes conducteurs de sorte que le courant produit peut circuler d'un balai vers la plaque 201 correspondante via le porte-balai correspondant, sans passer par les câbles 205.

Une rupture de câble 205 risque donc de ne pas être détectée. Également, un déséquilibre dans la collecte de courant d'un balai à l'autre risque de ne pas être détecté.

En référence à la figure 3A, on prévoit un support à forme générale de plaque 10, ici vu en coupe. Ce support 10 comprend une plaque conductrice 11, du type bus barre, et sur une partie de laquelle on a appliqué une couche de matériau isolant 12.

Sur la couche 12 on a fixé, ici avec des vis 21, un porte balai 20.

Ce porte balai 20 est réalisée à partir d'une feuille métallique. Cette feuille est pliée ou emboutie de façon à définir avec la couche isolante 12 un logement pour recevoir un balai 30.

Un ressort non représenté permet de pousser le balai 30 suivant une direction normale au plan de la feuille, vers par exemple une bague.

De façon connue en soi, le balai est raccordé à un câble 40.

Ce câble 40 est lui-même raccordé à une cosse 41 laquelle est fixée par un système tige filetée-écrou 42 dans la plaque conductrice 11.

On pourra relever que les vis 21 servant à fixer le porte balai 20 à la couche isolante 12 sont reçus dans un orifice 18 traversant la portion conductrice 11. Un insert 17 en matériau isolant recouvre les parois de l'orifice 18 : le balai 30 n'est en contact électrique avec la plaque conductrice 11 que via le câble 40.

Dans le cas de vis suffisamment longues pour qu'une partie ressorte du côté opposé au côté du porte-balai, on pourra prévoir de recouvrir les extrémités des vis avec un isolant de type rondelle, bouchon, ou autre.

Alternativement ou en complément, les vis-elles-mêmes pourraient être réalisées en un matériau isolant, ou recouvertes de matériau isolant. On pourra par exemple avoir recours à du PTFE (polytetrafluoroéthylène), ou autre.

Le matériau isolant de l'insert 17 peut par exemple être un composite de résine époxy renforcé de fibres de verres. On pourra choisir le même matériau pour la couche isolante 12, ou non.

Le courant collecté par le balai 30 parvient donc à la plaque conductrice 11 via le câble 40.

Dans cet exemple, la couche isolante peut être réalisée par exemple en un composite de résine époxy renforcé de fibres de verres.

Dans un mode de réalisation alternatif et non représenté, à la place de la couche isolante 12, on pourra prévoir une couche résistante, par exemple obtenue en appliquant une peinture sur une partie de la surface de la plaque 11.

Dans cet exemple, la couche isolante 12 s'étend sur une partie seulement de la surface de la plaque conductrice 11, cette partie correspondant à l'emplacement du porte-balai 20.

Dans l'exemple de la figure 3B, on a appliqué du matériau isolant 12 sur toute la surface de la plaque conductrice 11, à l'exception de plots de contact 42'.

Le porte-balai 20 définit une cage avec quatre cotés, et comprend deux oreilles 29 dans un plan déporté par rapport à l'emplacement du balai et noyées dans le matériau isolant 12, ces oreilles n'étant pas en contact électrique direct avec la plaque conductrice 11.

La couche isolante 12 est ainsi située entre le balai de graphite 30 et la plaque conductrice 11, et est conformée pour empêcher tout passage de courant entre le balai 30 et la plaque conductrice 11 autrement que via le câble 40 raccordé au plot 42'.

Sur cette figure 3B, on n'a pas non plus représenté les moyens ressorts pour pousser le balai vers l'élément tournant.

En référence à la figure 3C, les moyens ressorts ne sont pas non plus représentés, mais on voit en revanche comment le câble 40 est fixé au balai 30.

Dans ce mode de réalisation le support 10 comprend une plaque conductrice 11 en arc de cercle, jouxtant une partie de portion isolante 12. Le matériau isolant a été appliqué contre un bord 13 de la plaque conductrice 11, formant une partie isolante 12.

Dans cet exemple, le porte-balai a été obtenu en emboutissant une tôle et en fixant des oreilles 29 sur la portion isolante 12 par tout moyen approprié, par exemple par laminage, par collage ou autre.

Le balai 30 est en contact avec le matériau isolant 12, lequel empêche tout transfert de courant entre le balai 30 et la plaque conductrice 11 autrement que via un câble non représenté.

Dans un mode de réalisation non représenté, le support peut comprendre une plaque isolante, et une portion conductrice constituée d'une piste en métal montée sur cette plaque isolante, ou bien encore noyée dans le matériau de cette plaque isolante.

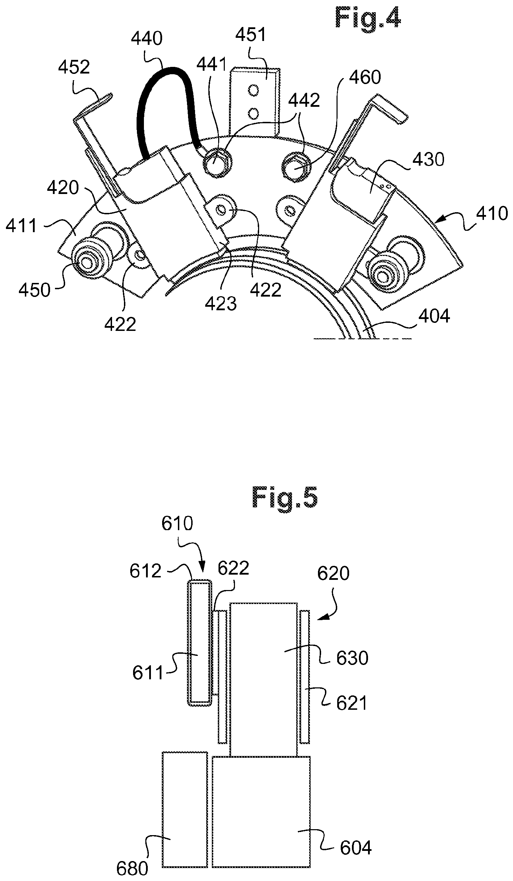

Dans le mode de réalisation de la figure 4, on prévoit un support 410 à forme générale de plaque comprenant une plaque métallique 411 de type bus barre, dont une face au moins (celle visible sur la figure 4) est entièrement recouverte de matériau isolant non représenté sur cette figure 4.

Ce support 410 est concave du côté du rotor 404, de façon à entourer partiellement le rotor.

Une tige de montage 450 permet de fixer le support 410 sur une partie fixe non représentée.

Une barre 451 de connexion électrique permet de raccorder électriquement le support 411 à des câbles de transfert de puissance (non représentés) installés sur une partie fixe de la nacelle.

Deux porte-balais 420 sont fixés de manière non amovible sur le support 410. Ces porte-balais 420 définissent chacun une cage pour recevoir un balai 430 et comprennent en outre un système de pression 450 pour recevoir un ressort non représenté, ce ressort permettant de pousser le balai correspondant contre le rotor 404.

Chaque porte-balai 420 comprend deux oreilles 422 s'étendant chacune depuis une paroi 423 du porte-balai vers l'extérieur du porte-balais, dans un plan déporté par rapport à l'emplacement du balai.

Chaque oreille 422 a été laminée dans la couche isolante non représentée, permettant ainsi de fixer de façon non amovible les porte-balais 420 sur le support 410. Le laminage est effectué en prenant soin d'éviter tout contact entre les oreilles et le bus barre 411, évitant ainsi de créer un chemin pour le passage du courant collecté depuis le rotor 404 autre que celui passant par les câbles 440.

Alternativement, dans un mode de réalisation non représenté, on pourrait par exemple utiliser les orifices des oreilles 422 pour fixer ces oreilles par vissage contre des inserts recouvrant les parois d'orifices correspondant, comme dans le mode de réalisation de la figure 3A.

Un moyen de raccordement, par exemple une tige de connexion électrique 441, traversant la couche isolante non représentée et en contact avec la plaque conductrice 411 permet d'assurer le passage du courant du câble 440 vers la plaque conductrice 411.

La tige de connexion électrique 441 peut avoir une forme connue en soi. Par exemple, cette tige peut comprendre une tige filetée, un écrou non représenté et éventuellement un support 442 : une cosse d'extrémité du câble 440 peut être insérée autour de la tige et comprimée entre l'écrou et le support 442 (ou entre l'écrou et la couche isolante).

Un capteur de courant 460 est installé à proximité de la tige 441.

Ce capteur de courant peut être noyé dans la couche de matériau isolant non représentée.

Ce capteur peut mesurer l'intensité du courant traversant le câble ou la tige 441, c'est-à-dire grâce à l'isolation du balai réalisée, la totalité du courant collectée par ce balai.

Dans le mode de réalisation de la figure 5, un support à forme générale de plaque 610 comprend un bus barre 611 enrobé d'une couche isolante 612.

Un balai 630 est reçu dans un porte-balai 620 comprenant des moyens ressort non représentés pour pousser le balai 630 en contact contre un élément tournant 604.

Plusieurs éléments tournants sont prévus, même si un seul 604 est représenté ici, les éléments tournants étant séparés les uns des autres par de disques isolants dont l'un 680 est représenté.

Dans ce mode de réalisation, le porte-balai 620 est réalisé en deux parties 621, 622 assemblables l'un à l'autre de façon réversible.

Plus précisément, le porte-balai 620 comprend une partie amovible 621 comprenant la cage destinée à recevoir le balai 630, et une partie adaptatrice 622 fixée de manière non amovible sur le support 610.

Par exemple, la partie amovible peut comprendre le moyen ressort exerçant une pression pour pousser le balai 630 en contact contre l'élément tournant 604.

Par exemple, le raccordement du câble non représenté dont une extrémité est en contact avec le balai 630 à la plaque conductrice peut être assuré par un moyen de raccordement monté sur le porte-balai.

Ce moyen de raccordement non représenté, par exemple un système de tige, peut être monté sur la partie adaptatrice 622, et traverser la couche isolante 612 jusqu'au contact avec le busbar 611.

Le moyen de raccordement peut par exemple être vissé, clipsé, ou autre, sur la partie adaptatrice 622.

Avantageusement, on peut prévoir un système dit d'échange sous-tension (ou « plug-set » en anglais) permettant de connecter/déconnecter les balais alors que la machine est en charge, notamment dans le cas d'une application aux générateurs synchrones des centrales hydroélectriques.

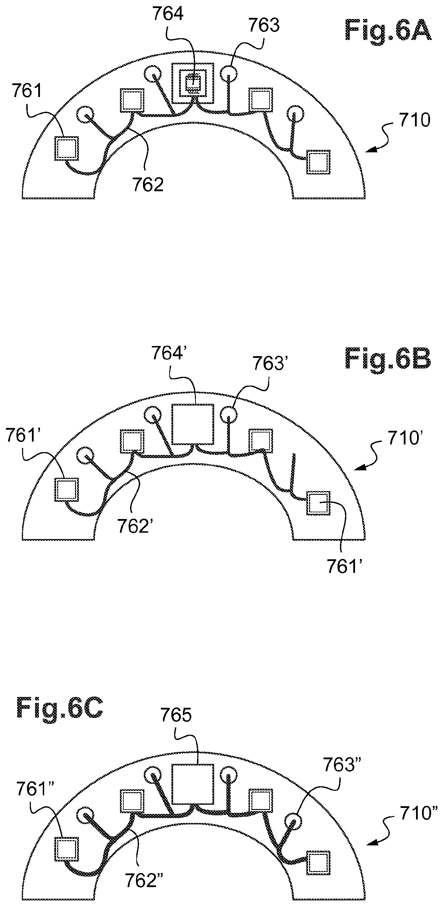

En référence aux figures 6A, 6B et 6C, on a représenté des supports 710, 710', 710" vus depuis le côté opposé au côté correspondant à la face sur laquelle sont montés les porte-balais. Les porte-balais ne sont donc pas visibles sur ces figures.

Les supports 710, 710', 710" peuvent définir des orifices 763, 763', 763", dont les bords et els parois internes peuvent être recouverts de matériau isolant, pour le passage de fils connectés à des capteurs installés sur la face du support sur laquelle sont montés les porte-balais. On peut par exemple prévoir une rondelle en matériau isolant reçue dans un orifice.

On peut aussi prévoir d'aménager des passages de câble directement dans du matériau isolant.

Ces capteurs côté porte-balais peuvent par exemple comprendre des capteurs de température, par exemple des capteurs mesurant la température dans la couche de matériau isolant enrobant le bus barre.

On pourra prévoir d'estimer la température dans le porte-balai en fonction des valeurs mesurées par ces capteurs et en fonction de valeurs stockées en mémoire de conductivité thermique.

Les références 761, 761', 761" désignent des capteurs montés sur la face opposée à la face supportant les porte-balai, visible donc sur ces figures, par exemple des capteurs de courant montés autour de tiges de connexion assurant le transfert du courant collecté.

Il est avantageux d'installer ainsi des capteurs sur la face opposée à la face supportant les porte-balais, relativement peu encombrée, ce qui peut faciliter la maintenance.

Des éléments linéaires conducteurs 762, 762', 762", ici flexibles, par exemple de type nappe (762, 762'), sont raccordés aux capteurs 761, 761', 761" et aux capteurs sur la face non visible, en passant alors par les orifices 763, 763', 763".

Les éléments linéaires conducteurs 762, 762', 762" peuvent être noyées dans le matériau isolant enrobant le busbar.

Dans le mode de réalisation de la figure 6A, on prévoit un circuit imprimé 764 ou PCB (pour « Printed Circuit Board ») flexible et laminé dans le matériau isolant enrobant les deux faces du bus barre.

Il est avantageux de prévoir au moins un capteur sur la même face qu'au moins un élément de traitement (processeur ou autre), permettant ainsi d'éviter de percer la plaque conductrice.

Ceci peut permettre d'obtenir des lignes de champs mieux réparties, ce qui limite les échauffements. En outre, ceci peut permettre d'avoir une meilleure distance d'isolement (« creepage » en anglais).

Les composants sont donc noyés dans le matériau isolant, par exemple du PEN.

Dans le mode de réalisation de la figure 6B, on prévoit un PCB de type carte, rigide, reçue dans un boîtier 764' soudé ou vissé au bus barre.

Les éléments linéaires conducteurs 762' sont flexibles (nappe).

Dans le mode de réalisation de la figure 6C, les éléments linéaires conducteurs sont des fils ou câbles électriques classiques, noyés aussi dans le matériau isolant. On pourra prévoir des rainures dans le support pour recevoir ces fils 762".

Ces fils 762" sont raccordés à un circuit imprimé reçu dans un boîtier 765 monté sur la couche isolante, par exemple au moyen de vis.

Dans tous les cas, on peut prévoir en outre une connexion de type bus CAN (pour « Controller Area Network »).

## Revendications

1. Système de transfert de courant entre un élément tournant et un élément fixe, l'élément tournant étant animé d'un mouvement de rotation par rapport à l'élément fixe, ledit système de transfert comprenant
- un support à forme générale de plaque (10) en périphérie de l'axe de rotation de l'élément tournant, comprenant une portion conductrice (11) raccordée électriquement à l'un parmi l'élément fixe et l'élément tournant,
- au moins un porte-balai (20) monté sur et supporté par le, ou intégré au, support (10), et conformé pour soutenir au moins un élément de contact glissant conducteur (30)
- l'élément de contact glissant conducteur (30), soutenu par le porte-balai et destiné à être poussé en contact contre l'autre parmi l'élément fixe et l'élément tournant,
**caractérisé en ce que** ledit système de transfert comprend en outre:
- un élément de résistance situé entre cet élément de contact glissant conducteur (30) et la portion conductrice (11) du support lorsque l'élément de contact glissant conducteur (30) est poussé en contact, pour limiter le passage de courant directement entre la portion conductrice (11) et l'élément de contact glissant conducteur (30),
- des moyens de raccordement électrique de la portion conductrice (11) du support à un câble solidarisé à l'élément de contact glissant conducteur (30) pour le transfert de courant entre cette portion conductrice (11) et l'élément de contact glissant conducteur (30).

2. Système selon la revendication 1, dans lequel l'élément de résistance comprend un élément isolant situé entre cet élément de contact glissant conducteur (30) et la portion conductrice (11) du support (10), lorsque l'élément de contact glissant conducteur est soutenu par le porte-balai et poussé en contact, et le système est conformé de sorte que l'élément isolant empêche alors le passage de courant directement entre la portion conductrice et l'élément de contact glissant conducteur.

3. Système selon la revendication 1 ou 2, comprenant en outre au moins un capteur (460 ; 761 ; 761' ; 761") apte à mesurer une valeur de paramètre caractérisant le fonctionnement de l'élément de contact glissant conducteur (430).

4. Système selon la revendication 3, comprenant en outre au moins deux éléments linéaires conducteurs (762; 762' ; 762") raccordant électriquement le capteur (460 ; 761 ; 761'; 761") à des moyens de traitement (763 ; 764 ; 765) afin d'échanger des mesures ou des commandes,
**caractérisé en ce que** ces éléments linéaires conducteurs sont au moins en partie noyés dans du matériau résistant ou isolant.

5. Système selon l'une quelconque des revendications 3 à 4, comprenant en outre des moyens de traitement (763 ; 764 ; 765) en communication avec un dispositif de ventilation et avec le ou les capteurs (460 ; 761 ; 761'; 761"),
**caractérisé en ce que** lesdits moyens de traitement sont agencés pour piloter le dispositif de ventilation en fonction des valeurs mesurées issues du ou des capteurs.

6. Système selon l'une quelconque des revendications 1 à 5, dans lequel la portion conductrice comprend une plaque conductrice (11 ; 411 ; 511 ; 611) de type bus barre.

7. Système selon la revendication 6, dans lequel l'élément de résistance (12) est obtenu en appliquant sur la plaque conductrice (11) un matériau résistant présentant une résistivité d'au moins 0,1 ohmmètre.

8. Système selon la revendication 7, dans lequel le porte-balai définit (420) au moins une oreille (422) s'étendant depuis une paroi du porte-balai vers l'extérieur du porte-balais, dans un plan plus proche du support que l'emplacement du balai (30), ledit emplacement étant défini par les parois du porte-balai, et dans lequel ladite oreille est laminée dans le matériau résistant ou isolant.

9. Système selon la revendication 7 ou 8, dans lequel l'élément de résistance (512 ; 612) est obtenu en enrobant et/ou surmoulant la plaque conductrice (511 ; 611) avec le matériau résistant.

10. Système selon l'une quelconque des revendications 1 à 9, **caractérisé en ce qu'**une partie (420 ; 622) au moins du porte-balai est fixée de façon non amovible sur le support (410 ; 610).

11. Système selon l'une quelconque des revendications 1 à 10, dans lequel le porte-balai (20 ; 420) est réalisé à partir d'une seule feuille métallique.

12. Ensemble comprenant un élément tournant (404), un élément fixe, et le système de transfert selon l'une quelconque des revendications 1 à 11.

13. Utilisation de l'ensemble selon la revendication 12 dans l'industrie ou dans l'éolien.

14. Procédé de réalisation d'un système de transfert de courant entre un élément tournant et un élément fixe, l'élément tournant étant animé d'un mouvement de rotation par rapport à l'élément fixe, le procédé comprenant
- prévoir un support à forme générale de plaque (10) , destiné à être situé en périphérie de l'axe de rotation de l'élément tournant, comprenant une portion conductrice (11), , la portion conductrice étant destinée à être raccordée électriquement à l'un parmi l'élément fixe et l'élément tournant,
- prévoir au moins un porte-balai (20) installé sur le ou intégré au support (10), conformé pour soutenir un élément de contact glissant conducteur (30)
- installer l'élément de contact glissant conducteur (30) dans le porte-balai (20), cet élément étant destiné à être poussé en contact contre l'autre parmi l'élément fixe et l'élément tournant,
- prévoir un élément de résistance situé entre l'élément de contact glissant conducteur : (30) lorsque poussé en contact et la portion conductrice (11) du support,
- prévoir des moyens de raccordement électrique de la portion conductrice (11) à un câble solidarisé à l'élément de contact glissant conducteur (30) pour le transfert de courant entre la portion conductrice (11) et l'élément de contact glissant conducteur (30) .

15. Procédé selon la revendication 14, comprenant en outre
appliquer un matériau résistant sur la portion conductrice et/ou sur le porte-balai de façon à former l'élément de résistance.

## Patentansprüche

1. Stromübertragungssystem zwischen einem drehenden Element und einem festen Element, wobei das drehende Element eine Drehbewegung gegenüber dem festen Element aufweist, das Übertragungssystem umfassend
- einen allgemein plattenförmigen Träger (10) am Umfang der Drehachse des drehenden Elements, der einen leitenden Teil (11) umfasst, der elektrisch mit einem zwischen dem festen Element und dem drehenden Element verbunden ist,
- mindestens einen Bürstenhalter (20), der auf dem Träger (10) montiert und von diesem getragen wird oder in diesen integriert ist und so geformt ist, dass er mindestens ein leitendes Gleitkontaktelement (30) stützt
- das leitende Gleitkontaktelement (30), das vom Bürstenhalter gestützt wird und dazu bestimmt ist, zwischen dem festen Element und dem drehenden Element gegeneinander geschoben zu werden,
**dadurch gekennzeichnet, dass** das Übertragungssystem ferner Folgendes umfasst:
- ein Widerstandselement, das sich zwischen diesem leitenden Gleitkontaktelement (30) und dem leitenden Teil (11) des Trägers befindet, wenn das leitende Gleitkontaktelement (30) in Kontakt gedrückt wird, um den Stromfluss direkt zwischen dem leitenden Teil (11) und dem leitenden Gleitkontaktelement (30) zu begrenzen,
- Mittel für den elektrischen Anschluss des leitenden Teils (11) des Trägers an ein mit dem leitenden Gleitkontaktelement (30) verbundenes Kabel zur Stromübertragung zwischen diesem leitenden Teil (11) und dem leitenden Gleitkontaktelement (30).

2. System nach Anspruch 1, wobei das Widerstandselement ein Isolierelement umfasst, das sich zwischen diesem leitenden Gleitkontaktelement (30) und dem leitenden Teil (11) des Trägers (10) befindet, wenn das leitende Gleitkontaktelement vom Bürstenhalter gestützt und in Kontakt gedrückt wird, und das System so gestaltet ist, dass das Isolierelement dann den Stromfluss direkt zwischen dem leitenden Teil und dem leitenden Gleitkontaktelement verhindert.

3. System nach Anspruch 1 oder 2, ferner umfassend mindestens einen Sensor (460; 761; 761'; 761"), der in der Lage ist, einen Parameterwert zu messen, der die Funktion des leitenden Gleitkontaktelements (430) charakterisiert.

4. System nach Anspruch 3, ferner umfassend mindestens zwei leitende Linearelemente (762; 762'; 762"), die den Sensor (460; 761; 761'; 761") elektrisch mit Verarbeitungsmitteln (763; 764; 765) verbinden, um Messungen oder Befehle auszutauschen,
**dadurch gekennzeichnet, dass** diese leitenden Linearelemente mindestens teilweise in widerstandsfähigem oder isolierendem Material eingebettet sind.

5. System nach einem der Ansprüche 3 bis 4, ferner umfassend Verarbeitungsmittel (763; 764; 765) in Verbindung mit einer Lüftungsvorrichtung und mit dem oder den Sensoren (460; 761; 761'; 761"),
**dadurch gekennzeichnet, dass** die Verarbeitungsmittel so angeordnet sind, dass sie die Lüftungseinrichtung in Abhängigkeit von den Messwerten aus dem oder den Sensoren steuern.

6. System nach einem der Ansprüche 1 bis 5, wobei der leitfähige Teil eine leitfähige Platte (11; 411; 511; 611) des Busbar-Typs umfasst.

7. System nach Anspruch 6, wobei das Widerstandselement (12) durch Anbringen eines widerstandsfähigen Materials mit einem Widerstand von mindestens 0,1 Ohm-Meter auf die leitfähige Platte (11) erzielt wird.

8. System nach Anspruch 7, wobei der Bürstenhalter (420) mindestens einen Ansatz (422) definiert, das sich von einer Wand des Bürstenhalters nach außen des Bürstenhalters in einer Ebene erstreckt, die dem Träger näher ist als die Position der Bürste (30), wobei die Position durch die Wände des Bürstenhalters definiert ist, und wobei der Ansatz in dem widerstandsfähigen oder isolierenden Material laminiert ist.

9. System nach Anspruch 7 oder 8, wobei das Widerstandselement (512; 612) durch Umhüllen und/oder Überformen der leitfähigen Platte (511; 611) mit dem widerstandsfähigen Material erzielt wird.

10. System nach einem der Ansprüche 1 bis 9, **dadurch gekennzeichnet, dass** mindestens ein Teil (420; 622) des Bürstenhalters unlösbar an dem Träger (410; 610) befestigt ist.

11. System nach einem der Ansprüche 1 bis 10, wobei der Bürstenhalter (20; 420) aus einer einzigen Metallfolie hergestellt **ist.**

12. Baugruppe umfassend ein drehendes Element (404), ein festes Element, und das Übertragungssystem nach einem der Ansprüche 1 bis 11.

13. Verwendung der Baugruppe nach Anspruch 12 in der Industrie oder in der Windkraft.

14. Verfahren zur Ausführung eines Stromübertragungssystems zwischen einem drehenden Element und einem festen Element, wobei das drehende Element eine Drehbewegung gegenüber dem festen Element durchführt, das Verfahren umfassend
- das Vorsehen eines allgemein plattenförmigen Trägers (10), der am Umfang der Drehachse des drehenden Elements angeordnet sein soll, der einen leitenden Teil (11) umfasst, wobei der leitende Teil dazu bestimmt ist, elektrisch mit einem zwischen dem festen Element und dem drehenden Element verbunden zu werden,
- das Vorsehen mindestens eines Bürstenhalters (20), der an dem oder in dem Träger (10) installiert oder integriert ist, um ein leitendes Gleitkontaktelement (30) zu stützen
- das Installieren des leitenden Gleitkontaktelements (30) in den Bürstenhalter (20), wobei dieses Element gegen das andere zwischen dem festen Element und dem drehenden Element geschoben werden soll,
- das Vorsehen eines Widerstandselements zwischen dem leitenden Gleitkontaktelement: (30), wenn es in Kontakt mit dem leitenden Teil (11) des Trägers geschoben wird,
- das Vorsehen elektrischer Verbindungsmittel des leitenden Teils (11) mit einem mit dem leitenden Gleitkontaktelement (30) verbundenen Kabel für die Stromübertragung zwischen dem leitenden Teil (11) und dem leitenden Gleitkontaktelement (30).

15. Verfahren nach Anspruch 14, ferner umfassend ein widerstandsfähiges Material auf den leitenden Teil und/oder den Bürstenhalter auftragen, um das Widerstandselement zu bilden.

## Claims

1. Current transfer system between a rotating element and a fixed element, the rotating element being moved with a movement of rotation with respect to the fixed element, said transfer system comprising
- a support having an overall shape of a plate (10) on the periphery of the axis of rotation of the rotating element, comprising a conductive portion (11) electrically connected to one out of the fixed element and the rotating element,
- at least one brush-holder (20) mounted on and supported by, or integrated into, the support (10), and shaped to hold at least one conductive sliding contact element (30),
- the conductive sliding contact element (30), supported by the brush-holder and intended to be pushed into contact against the other out of the fixed element and the rotating element,
**characterized in that** said transfer system further comprises :
- a resistance element located between this conductive sliding contact element (30) and the conductive portion (11) of the support when the conductive sliding contact element (30) is pushed into contact, to limit the passage of current directly between the conductive portion (11) and the conductive sliding contact element (30),
- means for electric connection of the conductive portion (11) of the support to a flexible rigidly connected to the conductive sliding contact element (30) for the transfer of current between this conductive portion (11) and the conductive sliding contact element (30).

2. System according to claim 1, wherein the resistance element comprises an insulating element located between this conductive sliding contact element (30) and the conductive portion (11) of the support (10), when the conductive sliding contact element is supported by the brush-holder and pushed into contact, and the system is shaped so that the insulating element thus prevents the passage of current directly between the conductive portion and the conductive sliding contact element .

3. System according to claim 1 or 2, further comprising at least one sensor (460; 761; 761'; 761") capable of measuring a parameter value characterizing the operation of the conductive sliding contact element (430).

4. System according to claim 3, further comprising at least two conductive linear elements (762; 762'; 762") electrically connecting the sensor (460; 761; 761'; 761") to processing means (763; 764; 765) in order to exchange measurements or controls,
**characterized in that** these conductive linear elements are at least partly embedded in resistant or insulating material.

5. System according to any one of claims 3 to 4, further comprising processing means (763; 764; 765) in communication with a ventilation device and with the sensor(s) (460; 761; 761'; 761"),
**characterized in that** said processing means are arranged to control the ventilation device according to the measured values coming from the sensor(s).

6. System according to any one of claims 1 to 5, wherein the conductive portion comprises a conductive plate (11; 411; 511; 611) of the busbar type.

7. System according to claim 6, wherein the resistance element (12) is obtained by applying onto the conductive plate (11) a resistant material having a resistivity of at least 0.1 ohm-meters.

8. System according to claim 7, wherein the brush-holder defines (420) at least one lug (422) extending from a wall of the brush-holder towards the outside of the brush-holder, in a plane closer to the support than the location of the carbon brush (30), said location being defined by the walls of the brush-holder, and wherein said lug is laminated in the resistant or insulating material.

9. System according to claim 7 or 8, wherein the resistance element (512; 612) is obtained by coating and/or overmolding the conductive plate (511; 611) with the resistant material.

10. System according to any one of claims 1 to 9,
**characterized in that** at least a part (420; 622) of the brush-holder is fastened in a non-removable manner onto the support (410; 610).

11. System according to any one of claims 1 to 10, wherein the brush-holder (20; 420) is made from a single metal sheet.

12. Assembly comprising a rotating element (404), a fixed element, and the transfer system according to any one of claims 1 to 11.

13. Use of the assembly according to claim 12 in industry or in the wind power industry.

14. Method for manufacturing a current transfer system between a rotating element and a fixed element, the rotating element being moved with a movement of rotation with respect to the fixed element, the method comprising
- providing a support having an overall shape of a plate (10), intended to be located on the periphery of the axis of rotation of the rotating element, comprising a conductive portion (11), the conductive portion being intended to be electrically connected to one out of the fixed element and the rotating element,
- providing at least one brush-holder (20) installed on or integrated into the support (10), shaped to hold a conductive sliding contact element (30),
- installing the conductive sliding contact element (30) in the brush-holder (20), this element being intended to be pushed into contact against the other out of the fixed element or the rotating element,
- providing a resistance element located between the conductive sliding contact element (30) when pushed into contact and the conductive portion (11) of the support,
- providing means for electric connection of the conductive portion (11) to a flexible rigidly connected to the conductive sliding contact element (30) for the transfer of current between the conductive portion (11) and the conductive sliding contact element (30).

15. Method according to claim 14, further comprising
applying a resistant material onto the conductive portion and/or onto the brush-holder in such a way as to form the resistance element.
